(19) Europäisches Patentamt
European Patent Office
Office européen des brevets

(11) **EP 2 015 468 A1**

(12) **EUROPEAN PATENT APPLICATION**

(43) Date of publication:
**14.01.2009 Bulletin 2009/03**

(51) Int Cl.:
***H04B 7/08*** (2006.01)

(21) Application number: **07013460.6**

(22) Date of filing: **10.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(72) Inventors:
• **Rossi, Leonardo**
  **29100 Piacenza (IT)**
• **Miletic, Alenka**
  **20091 Bresso**
  **(Milano) (IT)**

(71) Applicant: **SIAE Microelettronica S.p.A.**
**20093 Cologno Monzese (MI) (IT)**

(74) Representative: **Gatti, Enrico et al**
**Gianbrocono & C. s.p.a.**
**Via E. Zambianchi, 3**
**24121 Bergamo (IT)**

(54) **Baseband combiner for digital radio links**

(57) Baseband combiner for a digital radio link comprising: a first baseband demodulated signal originating from a first radio frequency signal; at least one second baseband demodulated signal originating from at least one second radio frequency signal; said first and said at least one second radio frequency signal being located on diversified transmission channels; characterized by comprising a first adaptive equalizer receiving said first demodulated signal to provide a first equalized signal; at least one second adaptive equalizer receiving said at least one second demodulated signal to provide at least one second equalized signal; an adder which receives said first and said at least one second equalized signal to provide a sum signal; an error calculation device which receives said sum signal to provide a signal indicative of the error; said error indicative signal being used to update the coefficients of said first and said at least one second adaptive equalizer.

Fig. 4

EP 2 015 468 A1

**Description**

The present invention relates to a baseband combiner for digital radio link and a radio link using this combiner, and also to a method for combining baseband signals.

In point-to-point radio link systems, connections must sometimes be made requiring high equipment performance to counteract problems due to deterioration of the transmission channel, especially due to echoes and excess attenuation originated by multipath propagation.

It is current practice to use space and/or frequency diversity systems to attain high objectives: this implies transmitting several radio signals carrying the same information or at least producing a multiplicity of received radio signals carrying the same information. Various methods are used to operate on this multiplicity of received signals (known as concurrent) carrying the same information to best reconstruct the original information.

The basic method, known in the diversity reception art, typically uses at least two receivers on the same radio frequency channel, the output signals of which are combined in baseband. The receivers are characterized by producing two mutually coherent signals using the same sinusoidal signal generated by a local oscillator, to convert the two received signals to lower frequencies or into baseband.

Examples of this method are found in EP 339 349, EP 902 556 and in the paper by C. Luschi, F. Guiglielmi and A. Spalvieri titled "Cross-polar interference cancelling and baseband combining by diversity reception" 5th Ecrr Bologna, 1996.

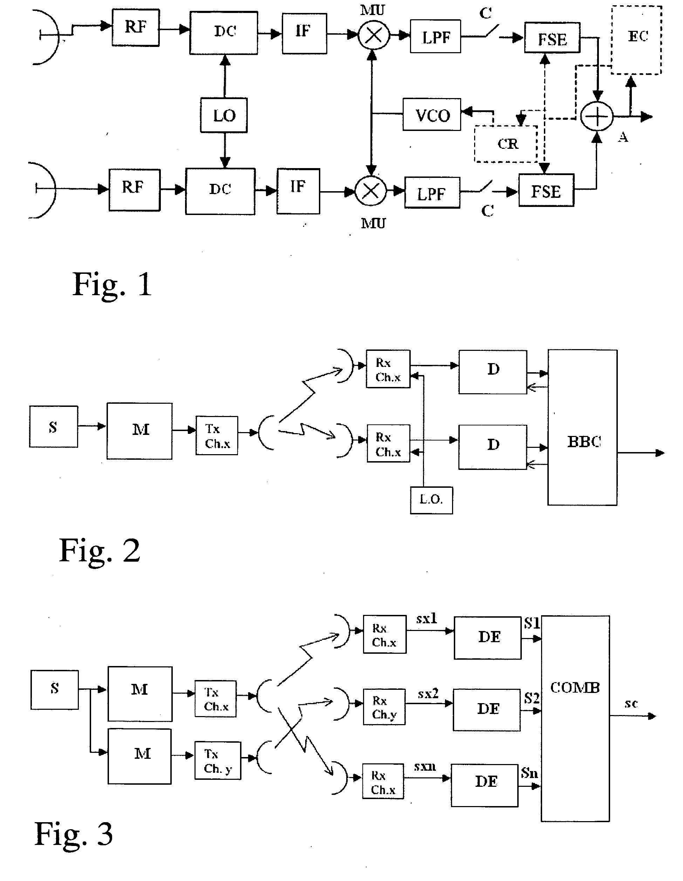

This solution is also shown in Figure 1.

It can be seen that after the radio frequency RF amplifiers, DC frequency converters (down converters) are present followed by the intermediate frequency IF amplifiers. A common local oscillator LO is connected to the DC frequency converters.

The baseband demodulation achieved by the multipliers MU, followed by the low pass filters LPF, by the samplers C and by the equalizers FSE, is effected by a common voltage controlled oscillator (VCO).

An error calculation device EC, positioned downstream of an adder A, controls the equalizers FSE and a carrier recovery device CR. This latter controls the oscillator VCO.

It is evident that the two equalizers FSE ( fractionally spaced , i.e. processing more than one sample per symbol period) and the control of the VCO must utilize a common measurement point for the feedback error calculation both for the adaptivity and the VCO locking. This measurement point must be taken downstream of the summation node which gives the result of the combination (the circuit indicated by the dashed-line blocks).

Details regarding the sampling time are not given in that, as the two FSEs are part of a single process which is closed after the summation node, this sampling time is also common for the two paths.

This transmission method requires the following constraints to be respected.

1 - The use of the same radio frequency channel as transmission medium. At the transmitting site the transmitter could be single and the transmitted signal be received by several receivers positioned in space diversity at the receiving site, or the same information could be transmitted by a second transmitter operating on the same radio frequency channel synchronous with the first, but cross polarized.

2 - The use of common local oscillator which determines a particular constructional choice for the equipment , with a tied interconnection between the receivers.

3 - The use of a sampling clock in reception which must be the same for the various concurrent signals or the use of a adaptive delay to be inserted and controlled by the optimum of the combination process.

4 - In addition, the loss of one of the signals leads to the loss of the entire reception process: this is an aspect often not highlighted.

The constraint of a common oscillator is a heavy impediment to the versatility of a radio link.

For example in the case of split-mount systems, the transceivers are mounted outside, on a pole or on a tower, and should be positioned immediately behind the antenna to eliminate losses due to the connections between them and the antenna. On the other hand they should be connected at a distance apart, the antennas being spaced apart, or if they are combined at an intermediate point between the two antennas they should in each case then be provided with the costly waveguide connection necessary for each to reach its own antenna, with consequent signal attenuations.

An object of the present invention is to provide a digital radio link having a baseband combiner which does not involve the constraints of the known art.

Another object is to provide a radio link which is made up of modular units.

These and further objects are attained according to the present invention by a baseband combiner for a radio link comprising: a first baseband demodulated signal originating from a first radio frequency signal; at least one second baseband demodulated signal originating from at least one second radio frequency signal; said first and said at least one second radio frequency signal being located on diversified transmission channels; characterized by comprising a first adaptive equalizer receiving said first demodulated signal to provide a first equalized signal; at least one second adaptive equalizer receiving said at least one second demodulated signal to provide at least one second equalized signal; an adder which receives said first and said at least one second equalized signal to provide a sum signal; an error calculation device which receives said sum signal to provide a signal indicative of the error; said error indicative signal being used to update the coefficients of said first and said at least one second adaptive equalizer.

These objects are also attained by a radio link comprising an information source; at least two separate transmitters arranged to encode said information with at least two sequences of identical symbols and to transmit said at least two symbol sequences on at least two diversified channels; at least two independent receivers to receive said at least two diversified channels, characterized by comprising a baseband combiner in accordance with what previously described.

Said objects are also attained by a method for combining baseband signals comprising the steps of: providing a first baseband demodulated signal; providing at least one second baseband demodulated signal; characterized by comprising the steps of equalizing said first signal to provide a first equalized signal; equalizing said at least one second signal to provide at least one second equalized signal; adding said first and said at least one second equalized signal to provide a sum signal; defining a signal decided on the basis of said sum signal; calculating a signal indicative of the error between said sum signal and said decided signal; updating the coefficients of said first and said at least one second equalizer by means of said error indicative signal.

Further characteristics of the invention are described in the dependent claims.

With the term "diversified transmission channels" is intended to mean any method suitable to obtain a multiplicity of received radio frequency signals, carrying the same information, mutually diversified by space diversity, frequency diversity, cross polarization or any other possible configurations.

In accordance with the method of the present invention, when it is required to up-grade the performance of a system over the basic approach of existing links, the same type of basic modules are used to freely compose the required reception diversification by space, frequency, etc., by adding further receivers and demodulators of the same type as the existing ones and combining their outputs without constraining in any manner the added receivers or demodulators.

Hence a single type of transceiver can be produced, to be used indifferently in all required configurations , from the simple to the high performance systems.

Moreover, a radio frequency signal insufficient for one receiver, and in certain cases even a signal at radio frequency insufficient for the other further receivers, does not preclude continuous operation of the system, even if probably at reduced performance.

Hence the use of a 4D adaptive equalizer for each demodulated signal, having the coefficients updated by a single error calculation device, enables an efficient combination of the signals deriving from independent receivers on diversified channels.

The characteristics and advantages of the present invention will be apparent from the ensuing detailed description of a practical embodiment thereof, illustrated by way of non-limiting example in the accompanying drawings, in which:

Figure 1 shows schematically two receivers with a baseband combiner of the known art;
Figure 2 shows schematically a radio link with a baseband combiner of the known art;
Figure 3 shows schematically a radio link with a baseband combiner in accordance with the present invention;
Figure 4 shows schematically a baseband combiner according to the present invention.

Figure 1 shows a receiver with a baseband combiner of the known art, Figure 2 showing the entire radio link, again of the known art.

Figure 2 shows an information source S, followed by a modulator M and then by a transmitter Tx, on channel x.

Reception is achieved by two receivers Rx on channel x, in space diversity. They are connected to a common local oscillator LO, then to two demodulators D which are followed by a baseband combiner BBC. The demodulators D comprise the internal blocks (MU, LPF, VCO, FSE, C, CR, EC) of the receiver of Figure 1 .

The combiner BBC provides control signals to the blocks FSE and CR.

Figure 3 shows a block scheme of a radio link with a baseband combiner according to the present invention.

It presents an information source S, the signal of which is fed to two modulators M and then to a transmitter Tx on channel x and to a transmitter Tx on channel y.

According to the present invention, the two modulators M generate a symbol sequence identical for the two transmitters Tx. A single modulator M could also be used for the two transmitters Tx.

In reception, the receivers Rx receive the channels x and y, to provide signals sx1 and sx2, and possibly sxn, to the demodulators DE.

In their turn, the demodulators DE feed the demodulated signals S1, S2, Sn to the baseband combiner COMB, which produces the combined signal sc.

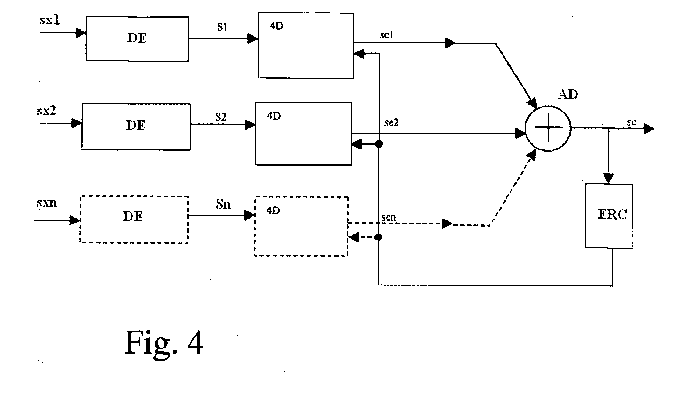

Figure 4 shows the baseband combiner of the present invention. Still present are the demodulators DE, which contain noise filters, the individual synchronism recovery circuits and the analog/digital converters, and can also conveniently comprise an adaptive equalizer and/or all which the designer considers necessary to include to provide the demodulated and possibly equalized overall signal. This is the known art and non-limitative of the constructive method for the stated demodulators, which will therefore not be further specified.

It should be noted that the possible equalizer included in each demodulator tries to counteract individual distortions to the limit of its possibilities without any benefit from the downstream combiner, from which it has to be independent. The result is that normally its output can be insufficiently equalized and unable to provide reconstructed symbols able to give reliable decisions.

The figure does not indicate the clock path, but it is evident that in a digital baseband processing, the subsequent blocks must be provided with the appropriate clock for the samples being processed, and that clock can be any one of the clocks individually extracted from the demodulators DE.

The samples must be maintained well aligned in feeding the downstream process. Each demodulator could in fact sample with a time phase difference with respect to the others, even though the signals are mutually synchronous, and a time slip could occur between one signal and another.

No further information will be provided on the problem, except to draw attention to methods of the known art relative to asynchronous sampling. All the demodulators could sample the individual signals with the same asynchronous clock of frequency >1/T. The demodulators would thus operate synchronously to each other.

The demodulators DE are connected to their respective 4D (four dimension) equalizers which correspond to a transversal structure with adaptive complex coefficients

The equalizers 4D feed the signals se1 , se2, sen to an adder node AD. At its output the combined signal sc is fed to a device ERC for error calculation, the output of which is connected to the equalizers 4D.

The device ERC can comprise a decision circuit, for example of threshold type.

When the signals to be combined are no longer mutually coherent i.e. because of the receiver independence they present rapidly variable relative phase rotations,steps must be taken in order to present to the combiner signals suitable to be summed in amplitude to produce the required improvement.

Moreover if, as normally happens, each signal requires its optimum sampling time given by the type of disturbance suffered when it has to be individually equalized, it must be also possible to produce a combination which is optimal. The combination must therefore be optimised even without imposing constraints between the combiner and the individual clock recoveries.

The two or more demodulated signals, possibly individually equalized , are in any case sampled on the basis of their own distortion; to be able to efficiently combine them, the concurrent signals must be presented to the combiner with an impulse response suitable to make their combination efficient.

In addition, the respective constellations provided by the demodulators must be mutually rotated and amplitude controlled in accordance with the combination optimum.

To solve the aforestated problems, as control functional for the combination optimum , use can be made of the known method of minimizing the mean square error at the decision circuit, recalculating the impulse response through the adaptive equalizers 4D.

It has been verified that said equalizers can be of the simple classical single-spaced structure, i.e. not FSE, but processing a single sample per symbol period. This fact, in contrast to Figure 1, is important in that the demodulator which precedes them does not have to process the signal at higher sampling rate, which would increase the cost. Moreover said equalizers 4D do not require a large number of coefficients. With no more than 7 complex coefficients excellent results are obtained (even 10 dB of signal/noise ratio improvement in the case of a transmission channel with strong intersymbol distortion), so maintaining a low cost implementation.

Each coefficient C of the equalizer 4D, at the time delay position m, is a vector defined according to the known art by:

$$c_m = [c_m^{11}; c_m^{22}; jc_m^{12}; jc_m^{21}]$$

and at time (n+1)*T it can be updated, by way of example, using the calculated error as:

$$c_{(n+1)T}^{11} = c_{nT}^{11} - stsz * \mathrm{Re}(\mathrm{err}_{(n+1)T}) * \mathrm{Re}(s1)$$

$$c^{22}_{(n+1)T} = c^{22}_{nT} - stsz * \text{Im}(\text{err}_{(n+1)T}) * \text{Im}(s1)$$

$$c^{12}_{(n+1)T} = c^{12}_{nT} - stsz * \text{Im}(\text{err}_{(n+1)T}) * \text{Re}(s1)$$

$$c^{21}_{(n+1)T} = c^{21}_{nT} - stsz * \text{Re}(\text{err}_{(n+1)T}) * \text{Im}(s1)$$

Where
stsz is a constant compression factor (for example $10^{-5}$),
err is the calculation error at time $(n+1)T$;
this operation is to be repeated for each signal sn.
The position index m has been omitted, hence meaning that the updating of the coefficient at position m uses the sample of the time delay position m of the signal s, in accordance with the known equalizer art.
The complex output signal from the equalizer 4D of 2p coefficients is then defined as:

$$\text{Re}(se1_n) = \sum_{-p}^{p} c_i^{11} \text{Re}(s1_{n-1}) + \sum_{-p}^{p} c_i^{21} \text{Im}(s1_{n-1})$$

$$\text{Im}(se1_n) = \sum_{-p}^{p} c_i^{22} \text{Im}(s1_{n-1}) + \sum_{-p}^{p} c_i^{12} \text{Re}(s1_{n-1})$$

The subscript n means the sampling time n. The combined signal is hence the sum of all the signals sen (i.e. all the n concurrent signals) as in Figure 4.
The combined signal sc is then fed to a decision circuit, not indicated in the figures. This calculates the error err on which the functional is based, to be used for updating the coefficients.
An example of the error calculation by the MSE (mean square error) method is the following:

$$Re(err) = (Re(sc)-Re(sd)$$

$$Im(err) = Im(s)-Im(sd)$$

Where sc is the combined signal and sd the hard decided signal.
The radio link conceived in this manner is susceptible to numerous modifications and variants, all falling within the scope of the inventive concept; moreover all details can be replaced by technically equivalent elements.

**Claims**

1. A baseband combiner for a radio link, comprising:

   a first baseband demodulated signal originating from a first radio frequency signal;
   at least one second baseband demodulated signal originating from at least one second radio frequency signal;
   said first and said at least one second radio frequency signal being located on diversified transmission channels;

   **characterized by** comprising a first adaptive equalizer receiving said first demodulated signal to provide a first equalized signal;

at least one second adaptive equalizer receiving said at least one second demodulated signal to provide at least one second equalized signal;

an adder which receives said first and said at least one second equalized signal to provide a sum signal;

an error calculation device which receives said sum signal to provide a signal indicative of the error;

said error indicative signal being used to update the coefficients of said first and said at least one second adaptive equalizer.

2. A combiner as claimed in claim 1, **characterized in that** said error calculation device comprises a decision circuit providing a decided signal, said error indicative signal being determined on the basis of said sum signal and said decided signal.

3. A combiner as claimed in claim 2, **characterized in that** said error indicative signal is determined by effecting the difference between said sum signal and said decided signal.

4. A combiner as claimed in claim 1, **characterized in that** said first and said at least one second adaptive equalizer are a four-dimension equalizer corresponding to a transversal structure having complex coefficient adaptation.

5. A radio link comprising an information source; at least two separate transmitters arranged to encode said information with at least two sequences of identical symbols and to transmit said at least two symbol sequences over at least two diversified channels; at least two independent receivers to receive said at least two diversified channels, **characterized by** comprising a baseband combiner in accordance with claim 1.

6. A radio link comprising an information source in accordance with claim 5, **characterized in that** said at least two diversified channels are allocated on at least two separate carrier frequencies.

7. A method for combining baseband signals comprising the steps of:

providing a first baseband demodulated signal;
providing at least one second baseband demodulated signal;

**characterized by** comprising the steps of equalizing said first signal to provide a first equalized signal;
equalizing said at least one second signal to provide at least one second equalized signal;
adding said first and said at least one second equalized signal to provide a sum signal;
defining a signal decided on the basis of said sum signal;
calculating a signal indicative of the error between said sum signal and said decided signal;
updating the coefficients of said first and said at least one second equalizer by means of said error indicative signal.

8. A method as claimed in claim 7, **characterized in that** the step of equalizing said first and said at least one second demodulated signal comprises the step of equalizing by means of a four-dimension equalizer, corresponding to a transversal structure having complex coefficient adaptation.

Fig. 1

Fig. 2

Fig. 3

Fig. 4

**European Patent Office**

**EUROPEAN SEARCH REPORT**

Application Number

EP 07 01 3460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 631 399 B (NIPPON ELECTRIC CO [JP]) 13 March 2002 (2002-03-13) | 1-3,5-7 | INV. H04B7/08 |
| A | * figure 1 * * paragraphs [0001] - [0006], [0016], [0017] * | 4,8 | |
| X | US 3 879 664 A (MONSEN PETER) 22 April 1975 (1975-04-22) * abstract * * figure 1 * * column 4, line 24 - column 5, line 24 * | 1,7 | |
| X | WO 2004/049595 A (KONINKL PHILIPS ELECTRONICS NV [NL]; DILOISY ROMAIN [FR]) 10 June 2004 (2004-06-10) * page 3, line 31 - page 4, line 6 * * page 5, line 4 - line 10 * * page 7, line 9 - line 18 * * page 9, line 3 - line 12 * | 1,7 | |

TECHNICAL FIELDS SEARCHED (IPC)

H04B
H04L

The present search report has been drawn up for all claims

| Place of search | Date of completion of the search | Examiner |
|---|---|---|
| Munich | 31 January 2008 | Mier, Ana |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 07 01 3460

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2008

| Patent document cited in search report | | Publication date | Patent family member(s) | | Publication date |
|---|---|---|---|---|---|
| EP 0631399 | B | 13-03-2002 | EP | 0631399 A1 | 28-12-1994 |
| | | | JP | 2885612 B2 | 26-04-1999 |
| | | | JP | 7015381 A | 17-01-1995 |
| | | | US | 5524125 A | 04-06-1996 |
| US 3879664 | A | 22-04-1975 | NONE | | |
| WO 2004049595 | A | 10-06-2004 | AU | 2003276573 A1 | 18-06-2004 |
| | | | CN | 1717877 A | 04-01-2006 |
| | | | EP | 1568154 A1 | 31-08-2005 |
| | | | JP | 2006508578 T | 09-03-2006 |
| | | | KR | 20050085201 A | 29-08-2005 |
| | | | US | 2006234662 A1 | 19-10-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 339349 A

- EP 902556 A

**Non-patent literature cited in the description**

- **C. LUSCHI ; F. GUIGLIELMI ; A. SPALVIERI.** *Cross-polar interference cancelling and baseband combining by diversity reception,* 1996